# EUROPEAN PATENT APPLICATION

(11) **EP 2 026 538 A1**
(43) Date of publication of application: **18.02.2009**
(21) Application number: 08251663.4
(22) Date of filing: 09.05.2008
(51) Int. Cl.: H04L 29/08, G06F 21/00, G06F 3/06, G06F 12/14, H04L 29/06

(54) **System and method for data protection management for network storage**

(30) Priority: 15.08.2007 US 839063
(71) Applicant: Hitachi, Ltd., Chiyoda-ku Tokyo (JP)
(72) Inventor: Kinoshita, Junji, Tokyo 100-8220 (JP)
(74) Representative: Hodsdon, Stephen James

(57) **Abstract**

A storage system is defined by multiple hard drives (HDDs - 150) which are divided into several HDD Groups (15). Each HDD Group consists of one or several HDDs. A storage administrator can set security related attributes to each HDD Group. The storage system may have logical volumes (151) mapped onto corresponding selected HDD Group. When the storage system assigns a logical volume to a host computer, the storage system receives security related requirements for the logical volume from the host computer. The storage system then compares the HDD Groups attributes and to the requirements and assigns an appropriate free space that meets requirements as a logical volume.

## Description

The present invention relates to protection of data stored in a storage system.

Companies or organizations generally have various files containing confidential data stored on their IT storage systems. The IT systems storing such confidential data may include various types of storage mediums, such as hard drives (HDD) within laptop computer, USB flash drives, backup tapes, optical disks, HDD within disk-array, and so on. Such storage mediums are often easily mobile, presenting a threat of data theft.

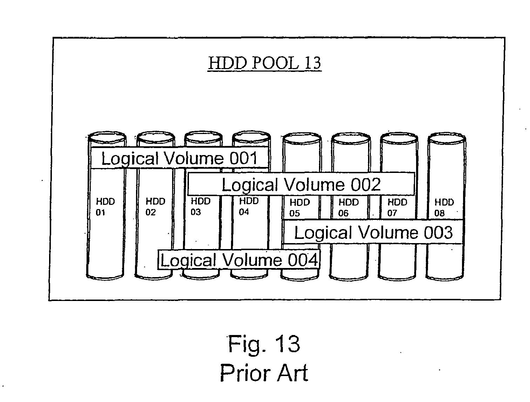

In general, "data encryption" and "data shredding" (sometimes called "data disposition") methods are used to prevent information leakage caused by theft of storage mediums. Various kinds of software or hardware for data encryption or shredding are available in the art, especially for end-users environment. These prior art applications can encrypt or shred all of the data stored within a physical HDD, flash drive, etc. On the other hand, in enterprise Storage Area network (SAN) environments, encryption or shredding are likely to be performed for logical volumes, rather than physical volume. As is known in the art, in SAN environment a disk array provides host computers with logical volumes, which are mapped onto plurality of physical storage mediums such as HDD. This is illustrated in Figure 13, in which a plurality of logical volumes (001-004) are mapped onto a plurality of HDD (01-08) of the available HDD pool 13. In such cases, software on the host computer, security appliances between the host computer and the disk array, switches, virtualization apparatus etc., cannot recognize the physical HOD, but rather only address the logical volumes. Consequently, encrypting and shredding programs and appliances encrypt or shred data by addressing logical volumes, not the physical volume.

On the other hand, encryption and shredding of logical volume make it difficult for the storage administrators to manage data security, because encrypted data or data that should be shredded is scattered across several HDD. That is, as is known in the art, any logical volume may be mapped onto several hard disk drives, as illustrated in Figure 13. Consequently, any hard drive may include stored encrypted confidential files and unsecured non-confidential file. That is, logical volume encryption could result in certain physical HDD containing different security level data. For example, if one assumes that logical volume 001 includes encrypted files while logical volume 002 does not, than HDD 01 includes only encrypted data, HDD 03 includes both encrypted and unencrypted data, and we don't know the status of HDD 02 without knowing the type of data contained in logical volume 004. Since addressing is done to the logical volume, from the point of view of clients accessing the SAN, it is not possible to know which HDD store what kind of files. Such a situation could lead to information leakage by accident and presents difficulties for auditing of the IT system's security..

For example, because of performance issue, cost issue or users security policy, not all of the logical volumes are encrypted. Therefore, some logical volumes remain not encrypted although they may contain confidential data. In such a case, the host administrators may want to shred all of the data in the non-encrypted logical volume when the data is no longer used. However, shredding of logical volume is usually achieved by overwriting random data, so it cannot be used for failed HDD. Therefore, the storage administrator has to destroy the failed HDD if it includes non-encrypted confidential data. However, as can be understood from the above discussion, due to the use of logical volume addressing, the storage administrator cannot easily identify which HDD contains non-encrypted data and which HDD should be destroyed.

Furthermore, during an audit of the IT system, the IT administrator needs to be able to identify which HDD contain encrypted data and which do not. However, the administrator has easy access to the logical volumes, not the physical volumes. Therefore, it is very difficult to comply with audit requirements using the prior art systems.

What is lacking in the art is a technology providing a way to enable separation of HDD's which contain secured data and those which do not. However, such technology needs to be transparent to the logical volume addressing scheme and not impose unnecessary burden on the logical volume addressing.

The following summary of aspects of the invention is provided in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

According to an aspect of the invention, a storage system comprises multiple hard drives (HDDs) which are divided into several HDD Groups. Each HDD Group consists of one or several HDDs. The storage administrator can set individual security related attributes to each HDD Group. The storage system may have logical volumes mapped onto corresponding selected HDD Group. When the storage system assigns a logical volume to a host computer, the storage system receives security related requirements for the logical volume from the host computer. The storage system then compares the HDD Groups' security attributes to the requirements, and assigns free space from an appropriate HDD group that meets requirements. Consequently, the administrator can easily recognize the security level of each HDD without reference to the logical volumes mapped onto the HDD group.

.According to aspects of the invention, a method for managing assignment of logical volumes within a storage system is provided, comprising:
a. Providing a plurality of hard drives;
b. defining at least two HDD groups;
c. assigning different security attributes to each of the HDD groups;
d. upon receiving a logical volume assignment requestfrom a host computer, comparing the security requirements of the logical volume to the security attributes and assigning the logical volume to the HDD group that matches the security requirements.

The method may further comprise the operations comprising: defining an HDD pool; and, upon installation of a new hard drive, assigning the new hard drive to the HDD pool. The method may further comprise, upon releasing of a free hard drive from an HDD pool, assigning the free hard drive to the HDD pool. The method may further comprise maintaining a configuration table and storing in the configuration table entries corresponding to: HDD group ID, HDD group security attribute, hard drive ID, and logical volume ID. The method may further comprise storing in the configuration table entries corresponding to logical volume size. The method may further comprise storing in the configuration table entries indicating encryption attributes for each of the HDD groups. The method may further comprise further comprising storing in the configuration table entries indicating shredding attributes for each of the HDD groups. The method may further comprise maintaining information table for each hard drive and storing in the information table entries corresponding to hard drive ID, physical location, status, and security attributes. The method mayfurther comprise storing in the information table entries indicating HDD group for each hard drive. The method may further comprise storing in the information table entries indicating encryption attributes for each hard drive. The method may further comprise storing in the information table entries indicating shredding attributes for each hard drive. The method may further comprise maintaining a physical indicator for each hard drive to indicate encryption and shredding attribute of each hard drive. The physical indicator may comprise an illumination device, and wherein the method comprises controlling illumination status of the illumination device to indicate encryption and shredding attribute of each hard drive.

According to other aspects of the invention, storage system enabling assignment of logical volumes while maintaining security attributes within hard drives is provided, comprising: a plurality of hard drives, each of the hard drive being assigned to one of at least two HDD groups; a configuration table having stored therein entries corresponding to: HDD group ID, HDD group security attribute, hard drive ID, and logical volume ID; a storage configuration module receiving logical volume assignment request and assigning the logical volume to one of the HDD groups by comparing security requirements of the logical volume to the security attributes stored in the configuration table. The system may further comprise a hard drive information table having stored therein entries corresponding to: hard drive ID, HDD group ID; and physical location. The system may further comprise a plurality of physical indicators, each indicator for a corresponding hard drive, each indicator providing indication of security attributes of the corresponding hard drive. At least some of the indicators may comprise illumination devices indicating encryption attribute of each corresponding hard drive. At least some of the indicators may comprise illumination devices indicating shredding attribute of each corresponding hard drive. The system may further comprise a hard drive pool for maintaining hard drive not assigned to any HDD group. The system may further comprise a shredding module and an encryption module.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part.of this specification exemplify the embodiments of the present invention and, together with the description, serve to explain and illustrate principles of the inventive technique. Specifically:

Figure 1 shows an example of physical hardware and logical software architecture of the first embodiment of the invention.

Figures 2(a) and 2(b) show an example of data structure for the requirements of logical volume according to an embodiment of the invention.

Figure 3 shows an example of data structure of storage configuration table according to an embodiment of the invention:

Figure 4 shows an example data structure of HDD information table according to an.embodiment of the invention.

Figure 5 shows an example of management window according to an embodiment of the invention.

Figure 6 shows an example of physical appearances of storage system according to an embodiment of the invention.

Figure 7 shows an example process to set up a HDD Group according to an embodiment of the invention.

Figure 8 shows an example process to assign Logical Volume according to an embodiment of the invention.

Figure 9 shows an example of a process to shred data according to an embodiment of the invention.

Figure 10 shows an example process to move Logical Volume according to an embodiment of the invention.

Figure 11 shows an example process to reconfigure HDD Group according to an embodiment of the invention.

Figure 12 shows an example of a process to return HDD to HDD Pool according to an embodiment of the invention.

Figure 13 illustrates an HDD pool with logical volumes mapped according to the prior art.

The aforementioned accompanying drawings show by way of illustration, and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense. Additionally, the various embodiments of the invention as described may be implemented in the form of software running on a general purpose computer, in the form of a specialized hardware, or combination of software and hardware.

According to features of embodiments of the invention, system and methods are provided to provide logical volume assignment, while maintaining track of which HDDs contain secured data and which do not. In this manner, encryption and shredding can be performed using logical volume addressing, while the storage administrator can maintain track of which HDDs contain encrypted data and which HDDs need to be shredded. More generally, according to embodiments of the invention the administrator is able to easily recognize the security level of each HDD without reference to the logical volumes mapped onto that particular HDD.

### Hardware Architecture

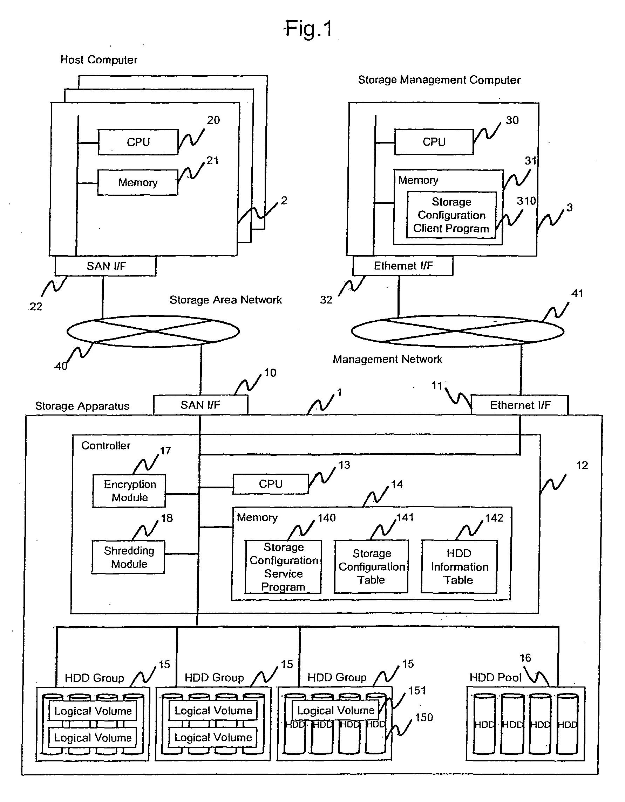

Figure 1 shows an example of physical hardware architecture according to an embodiment of the invention. The overall system consists of Storage System 1 and at least one Host Computer 2 and at least one Storage Management Computer 3. The Host Computer 2 and Storage System are connected through SAN (Storage Area Network) 40. The Storage Management Computer 3 and Storage System 1 are connected through Management Network 41. It should be appreciated, however, that this particular configuration is used as an illustration, and other configurations may be used with embodiments of the invention.

In this embodiment, the storage system 1 comprises at least one controller 12, at least one SAN interface 10, that is used for connecting to SAN 40, and at least one Ethernet interface 11, that is used for connecting to Management Network 41. Controller 12 is comprised of at least one CPU 13, and at least one Memory device 14. It also has one or more physical storage medium like HDD (Hard Disk Drive) 150, flash memory, optical disk, tape, and so on. It also has one or more Storage Group, Storage Pool, and Logical Volume 151. The Storage System 1 also has at least one Encryption Module 17 and at least one Shredding Module 18. The various elements listed will now be described in more details.
- Storage Group: It is comprised of a plurality of physical storage mediums. In this embodiment, as an example of Storage Group, Figure 1 shows three HDD Groups 15, each of which comprising a plurality of HDD 150. As can be understood from the description provided herein, each Storage Group may comprise one or more HDD devices 150. In some embodiments, each HDD Group could be equivalent to a "parity group", i.e., a RAID array. The Storage Administrator can set Security Attribute on each HDD Group, Using HDD Group and HDD Group Security Attribute, the Storage Administrator can apply a certain security level to all data within all HDD in one HDD Group. In this manner, the Storage Administrator can assure that there are not different security level data within one HDD, as is the case in the prior art.
- Storage Pool: It involves one or more physical storage mediums that are not included in Storage Group. In this embodiment, Figure 1 shows HDD Pool 16 that involves one or more HDD. When a HDD has been newly added to Storage System 1 and has not yet been assigned to any HDD Group, it exists within HDD Pool. When a HDD is failed, it is excluded from HDD Group and reassigned into HDD Pool.
- Logical Volume 151: Each logical volume 151 exists only within one Storage Group 15. In this embodiment, Logical Volume 151 is comprised of plurality of HDD 150 and exists within one HDD Group 15. Storage System 1 provides Host Computers 2 with Logical Volumes for the purpose of high availability. When a Host Computer needs a Logical Volume, the Host Computer Administrator requests Logical Volume assignment to the Storage Administrator. The request of Logical Volume assignment can include security:related requirements, such as the necessity of encryption, necessary encryption algorithm, key length, necessity of shredding, and so on. The Storage System compares security requirement for Logical Volume and HDD Group Security Attribute, and assigns appropriate Logical Volume to the Host Computer. For example, if a requirement of the Logical Volume specifies a certain encryption algorithm and key length, the Storage System assigns a Logical Volume from a HDD Group that includes the same encryption algorithm and key length within its Security Attribute. As a result, the Storage System 1 can provide Host Computers 2 with Logical Volume aligned security, and the Storage System 1 also can prevent the situation where different security level data exist in the same HDD, as is done in the prior art.
- Encryption Module 17: When Host Computer 2 writes data into a certain Logical Volume of Storage System, Encryption Module 17 encrypts data using a certain algorithm and key length that are defined in the Storage Configuration Table 141, and stores encrypted data into a HDD corresponding to the assigned Logical Volume. When Host Computer 2 reads data from a certain Logical Volume that contains encrypted data, Encryption Module 17 decrypts the data using a certain algorithm and key length that are defined in the Storage Configuration Table 141, and sends plain text data to the Host Computer. Encryption Module 17 can perform data encryption for each HDD Group, and can use different encryption algorithm, key, key length, etc., for each HDD Group, according to Security Attribute that is set to the HDD Group. The Security Attribute of Each HDD Group is defined in Storage Configuration Table 141, and Encryption Module 17 refers to the table when it encrypts or decrypts data. Encryption Module 17 can generate encryption keys for each HDD Group or each HDD for itself. Encryption keys could be stored in Encryption Module 17. Encryption keys also could be stored in Memory 14, HDD, etc. Encryption Module 17 also can receive encryption keys from external key management system outside the Storage Apparatus. Encryption Module 17 could be incorporated in Controller 12 or could be a separate element outside of the Controller 12. On the other hand, the Encryption Module 17 could be incorporated into each HDD Group 15 or each HDD 150. It also could be software program stored on Memory 14 and executed by Controller 12. In this embodiment, an Encryption Module 17 is a hardware module and incorporated into Controller 12.
- Shredding Module 18: When Host Computer 2 stops using a certain Logical Volume and the Storage System 1 frees the Logical Volume space, the Storage System 1 can perform data shredding, such as overwriting random data into the HDD corresponding to the released Logical Volume. Shredding Module 18 can perform data shredding for each Logical Volume and HDD Group, and can use different shredding algorithm for each HDD Group, according to Security Attribute that is set to the HDD Group. Security Attribute of Each HDD Group is defined in Storage Configuration Table 141, and Shredding Module 18 refers to the table when it shreds data. Shredding Module 18 could be incorporated into Controller 12 or could be outside the Controller 12. It could be incorporated into each HDD Group 15 or each HDD 150, or it could also be software programs stored on Memory 14 and executed by Controller 12. In this embodiment, Shredding Module 18 is a hardware module incorporated in Controller 12.

The host computer 2 comprises of at least one CPU 20, at least one Memory 21, and at least one SAN interface 22. It is connected to SAN 40 via SAN I/F 22. The storage management computer 3 comprises at least one CPU 30, at least one Memory 31, and at least one Ethernet interface 32. It is connected to Management Network 41 via Ethernet I/F 32. Storage Configuration Client Program 310 runs on management computer 3 and provides the Storage Administrator with management interface for Storage System configuration.

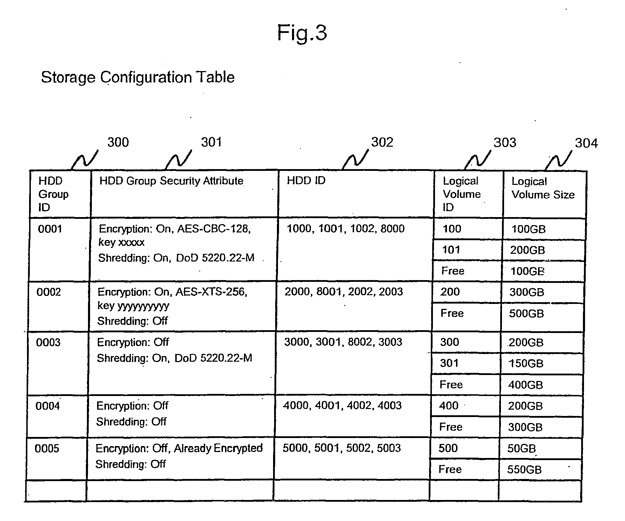

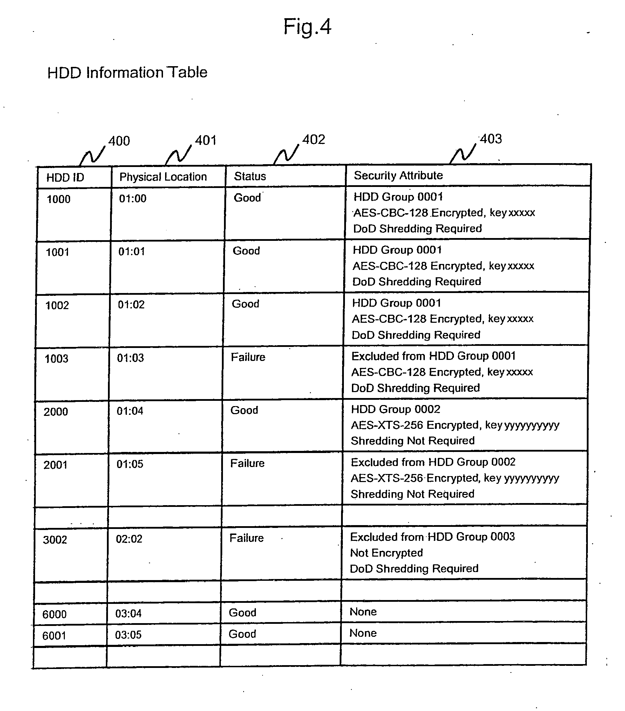

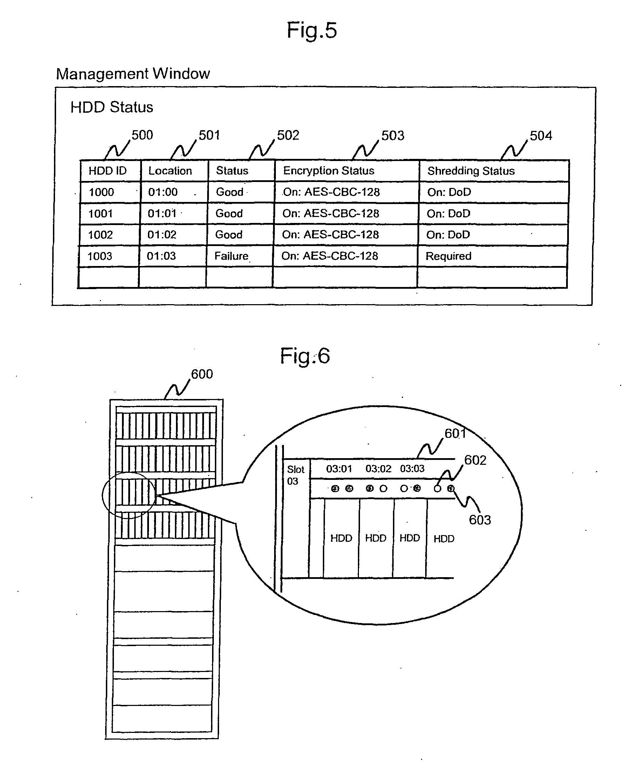

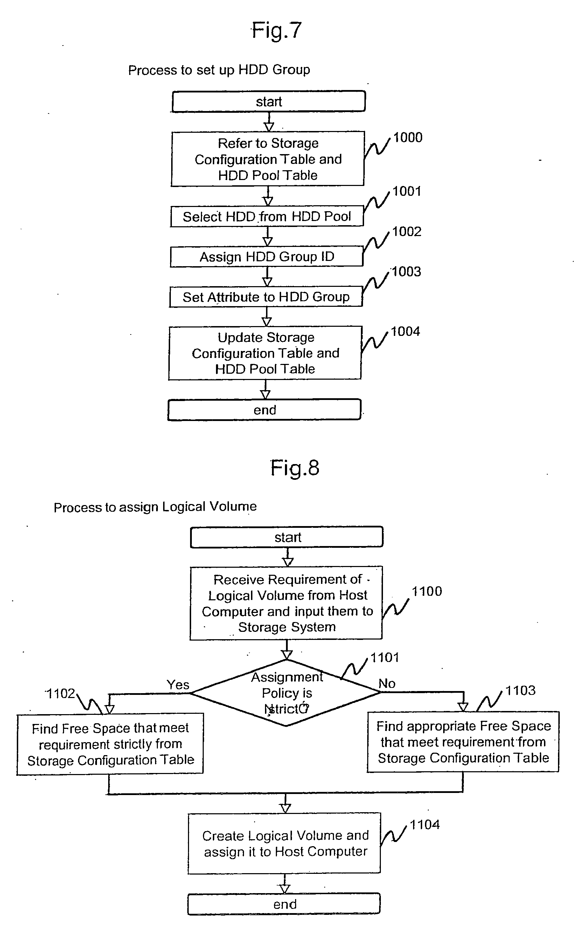

Various software programs are running on Controller 12. Those programs and information used by the programs are stored in Memory 14. CPU 13 executes those programs, which will be described in more details below. Notably, while these are described as programs, each should be understood that they may be implemented as software, hardware, or modules incorporating hardware and software.
- Storage Configuration Service Program (or module) 140: It provides Storage Administrators with management interface for the Storage System's configuration. The Storage Administrator can set up or modify the configuration of the Storage System. Using Storage Configuration Client Program 310, the Storage Administrator sends a request to Storage Configuration Service Program 140. The Storage Configuration Service Program 140 executes some actions according to the request, and sends a result back to the Storage Configuration Client Program 310. For example, the Storage Administrator can manage HDD Groups 15 and Logical Volumes 151 using this management interface. In addition, the Storage Administrator can set and view Security Attribute of each HDD Group, and view status or Security Attribute of each HDD (See Fig. 5). Storage Administrator also can input the Requirement of Logical Volume into Storage System using this management interface. When Storage System 1 receives a Requirement of Logical Volume, the Storage Configuration Service Program 140 refers to Storage Configuration Table 141, and compares the Requirement and Security Attribute of HDD Group that is defined in the Table 141, and then it assigns appropriate Logical Volume (Regarding the detailed process to assign Logical Volume, see description related to Figure 8). It also can show Security Attribute of each HDD using physical indicators, such as, e.g., LED (See Fig. 6).
- Storage Configuration Table 141: An example of a Storage Configuration Table 141 is illustrated in Figure 3, showing entries for storing definitions of HDD Groups. The Storage System 1 can group multiple HDD into one defined HDD Group. This table 141 shows the relationships between HDD Group and HDD. The Storage System 1 also can have security related attribute information for each HDD Group and Table 141 holds such Security Attribute information within it. The Storage System 1 can have Logical Volumes within each HDD Group, so this Table 141 also shows relationships between HDD Group and Logical Volume. When Storage System 1 receives a request of Logical Volume assignment, it refers to this table and compares security attribute of HDD Group and requirement for Logical Volume. Also, when the Storage Administrator modifies or views HDD Group, Logical Volume, and Security Attribute, the Storage System updates this table or shows this table to the Storage Administrator.
- HDD Information Table 142: An example of an HDD Information Table 142 is illustrated in Figure 4, showing it storing status information and Security Attribute of each HDD. If a new HDD is added, the Storage System 1 adds new entry into this Table 142. If an HDD fails and is excluded from an HDD Group, the Storage System 1 removes the entry correspondent to the HDD from Storage Configuration Table 141 and updates the entry of the HDD within this table. Using this table, Storage Configuration Service Program 140 shows the status and Security Attribute of each HDD via management interface (See Fig. 5) or physical indicators (See Fig. 6).
- Storage Configuration Client Program 310 provides the Storage Administrator with management interface for the Storage System's configuration.

### Data Structure

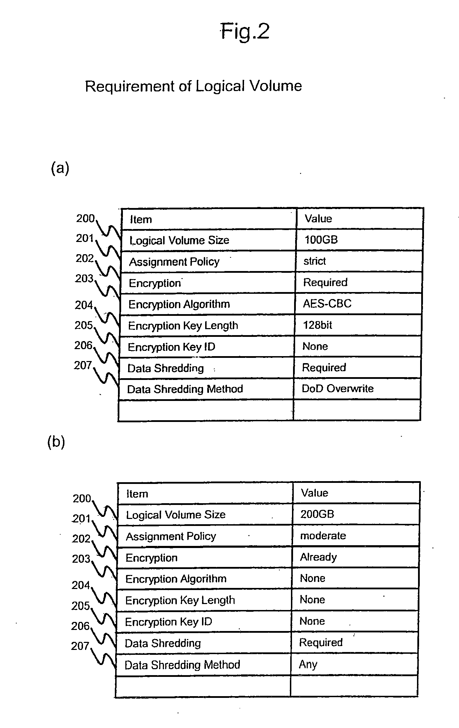

When a Host Computer 2 needs a Logical Volume, the Host Computer Administrator sends a request for an assignment of Logical Volume to Storage Administrator. Such a request includes some specified requirements. The Requirement of Logical Volume includes not only Logical Volume size, but also security related requirements for the Logical Volume. The Storage Administrator receives such requirements and sends them to the Storage Configuration Service Program 140 using the Storage Configuration Client Program 310. Figures 2(a) and 2(b) show examples of data structure of Requirement of Logical Volume. Notably; for this embodiment of the invention, the behavior of the prior art Host Computer 2 and Storage Management Computer 3 need not change with respect to the Requirement of the Logical Volume to be assigned. The various elements of the tables of Figures 2a and 2b will not be discussed.
- Logical Volume Size 200: It indicates the necessary size of the Logical Volume.
- Assignment Policy 201: It indicates a policy for Logical Volume assignment. In Figure 2(a), it indicates "strict" and it means that Host Computer 2 requires a Logical Volume that has Security Attribute corresponding to the requirement. On the other hand, in Figure 2(b) it indicates "moderate". It means that Host Computer 2 requires either a Logical Volume that has Security Attribute corresponding to the requirement or a Logical Volume that has stronger Security Attribute than the requirement. For example, if the Requirement of Logical Volume specifies a certain encryption algorithm and key length with "strict" policy, Storage System assigns a Logical Volume from a HDD Group whose Security Attribute include the same algorithm and the same key length. If Requirement of Logical Volume specifies a certain key length with "moderate" policy, Storage System can assign a Logical Volume from a HDD Group whose Security Attribute include a longer key length than Requirement. Additionally, if Host Computer 2 requests non-encrypted Logical Volume with "moderate" policy, Storage System 1 can assign encrypted Logical Volume to the Host Computer.
- Encryption 202: It indicates a requirement for data encryption. If it is "Required", Storage System finds a Free Space for a Logical Volume within HDD Group that has "Encryption: On" Security Attribute. If it is "Not Required", Storage System finds a Free Space within HDD Group that has "Encryption: On" or "Encryption: Off" Security Attribute (It depends on Assignment Policy 201). If it is "Already", it means that Host Computers already encrypts data for itself using some kind of encryption mechanisms. In such case, Storage System finds a Free Space within HDD Group that has "Encryption: Off, Already Encrypted" Security Attribute.
- Encryption Algorithm 203: It indicates a requirement for encryption algorithm that is used for data encryption of the Logical Volume.
- Encryption Key Length 204: It indicates a requirement for encryption key length.
- Encryption Key ID 205: It indicates a requirement for encryption key. As described above, Storage System 1 can automatically generate encryption keys, and Storage System 1 also can use encryption keys that have been generated by Host Computer 2 or key management system outside Storage System. In the latter case, Storage System 1 receives encryption keys and identification information for the keys in advance of the Requirement of the Logical Volume. Then, Host Computer 2 can require Storage System 1 to use specified encryption key using this field.
- Data Shredding 206: It indicates a requirement for data shredding. If it is "Required", Storage System 1 finds a Free Space for a Logical Volume within HDD Group that has "Shredding: On" Security Attribute. If it is "Not Required", Storage System finds a Free Space within HDD Group that has "Shredding: On" or "Shredding: Off" Security Attribute (It depends on Assignment Policy 201).
- Data Shredding Method 207: It indicates a requirement for shredding algorithm that is used for data shredding of Logical Volume.

Figure 3 shows an example data structure of Storage Configuration Table 141. The various entries will now be described in details.
- HDD Group ID 300: It indicates identification information of HDD Group.
- HDD Group Security Attribute 301: It indicates attribute information of security mechanism that is applied to data within the HDD Group. There could be several kinds of Security Attributes, and Figure 3 shows an example related to data encryption and shredding. As encryption related attribute, Figure 3 indicates encryption necessity, encryption algorithm, encryption key length, and encryption key identification. As shredding related attribute, Figure 3 indicates shredding necessity and algorithm. The Storage Administrator can define encryption and shredding requirement independently.
   ○ If the Storage Administrator defines "Encryption: On" and a specific algorithm like "AES-CBC" and a specific key length like "128bit" for a certain HDD Group, it means that Encryption Module encrypts data using that algorithm and key length. If Storage Administrator doesn't define a specific algorithm and key length, Storage Configuration Service Program sets default algorithm and key length for the HDD Group and Encryption Module encrypts data using default algorithm and key length. Storage Administrator can configure default algorithm and key length. Storage Configuration Service Program also sets encryption key identification information to Security Attribute. Encryption key identification information is correspondent to each encryption key. Regarding encryption key itself, Storage Configuration Service Program can automatically generate encryption key when Storage Administrator sets Security Attribute, or Storage Administrator also can receive encryption key that has been generated outside Storage System.
   ○ If Storage Administrator defines "Encryption: Off", it means that Encryption Module doesn't encrypt data of Logical Volume within the HDD Group.
   ○ If Storage Administrator defines "Shredding: On" and a specific algorithm like "DoD 5220.22-M", it means that Shredding Module shreds data using that algorithm in appropriate timing. For example, in a case in which Logical Volume is moved, in the case in which an HDD fails, or in a case in which HDD is returned to HDD Pool, etc. If Storage Administrator doesn't define a specific algorithm, the Storage Configuration Service Program sets default algorithm for the HDD Group and Shredding Module shreds data using default algorithm. The Storage Administrator can configure default algorithm.
   ○ If Storage Administrator defines "Shredding: Off", it means that Shredding Module doesn't shred data of Logical Volume within the HDD Group.
- HDD ID 302: It indicates identification information of HDD that is included in the HDD Group.
- Logical Volume ID 303: It indicates identification information of Logical Volume that is created within the HDD Group. If it is "free", it means that the HDD Group has enough Free Space to assign a Logical Volume within the Space.
- Logical Volume Size 304: It indicates the amount of Logical Volume or Free Space within the HDD Group.

Figure 4 shows an example data structure of HDD Information Table 142. Using this table, the Storage Configuration Service Program provides Storage Administrator with status and Security Attribute of each HDD via management interface (See Fig. 5) or physical indicators (See Fig. 6). The entries in this table are as follows.
- HDD ID 400: It indicates identification information of HDD.
- Physical Location 401: It indicates identification information of physical location of the HDD.
- Status 402: It indicates status of HDD.
- Security Attribute 403: It indicates attribute information of security mechanism that is already applied to or that should be applied to data within the HDD.

Figure 5 shows an example of Management Window that shows status and Security Attribute of each HDD to Storage Administrator via Storage Configuration Service Program and Storage Configuration Client Program. The illustrated elements according to this non-limiting embodiment are as follows.
- HDD ID 500: It indicates identification information of HDD.
- Location 501: It indicates identification information of physical location of the HDD.
- Status 502: It indicates status of HDD.
- Encryption Status 503: It indicates status of encryption of the HDD.
- Shredding Status 504: It indicates status of shredding of the HDD.

Figure 6 shows an example of Physical Appearances of Storage System 1 according to an embodiment of the invention. Notably, according to this embodiment easy identification of attributes of various HDD is enabled.
- Rack 600: It is rack to mount computer system chassis. In this embodiment, HDD of Storage System 1 is mounted within the rack-mount chassis, and each chassis is mounted on the rack 600.
- HDD Location ID 601: It shows an identification of a physical location of each HDD.
- Encryption Indicator 602: It shows encryption status of each HDD. It could be LED, LCD, etc. If it lights, it means that data in the corresponding HDD is encrypted. Of course, other methods can be used, such as colored light, LCD display, etc.
- Shredding Indicator 603: It shows shredding requirement for each HDD. It could be LED, LCD, etc. If it lights, it means that Storage Administrator needs to execute physical shredding for the corresponding HDD. Of course, other methods can be used, such as colored light, LCD display, etc.

Figure 7 shows an example process to set up an HDD Group executed by Storage Administrator using management interface.
- Step 1000: Storage Administrator refers to Storage Configuration Table and HDD Pool Table using management interface provided by Storage Configuration Service Program and Storage Configuration Client Program.
- Step 1001: Storage Administrator selects several HDD from HDD Pool to make an HDD Group.
- Step 1002: Storage Administrator groups those HDD. and assigns a unique HDD Group ID.
- Step 1003: Storage Administrator defines Security Attribute of the HDD Group.
- Step 1004: Storage Administrator updates Storage Configuration Table.

Figure 8 shows an example process to assign Logical Volume executed by Storage Administrator using management interface.
◆ Step 1100: Storage Administrator receives Requirement of Logical Volume from Host Computer Administrator and input them into Storage System using management interface provided by Storage Configuration Service Program and Storage Configuration Client Program.
◆ Step 1101: Storage Configuration Service Program checks whether Assignment Policy is "strict" or not. If Assignment Policy is "strict" then proceed to Step 1102 otherwise proceed to Step 1103.
◆ Step 1102: Storage Configuration Service Program finds Free Space within a HDD Group whose Security Attribute is equal to the Requirement of Logical Volume.
◆ Step 1103: Storage Configuration Service Program finds Free Space within a HDD Group whose Security Attribute is equal or stronger than Requirement of Logical Volume.
◆ Step 1104: Storage Administrator creates a Logical Volume within the Free Space and assigns it to the Host Computer.

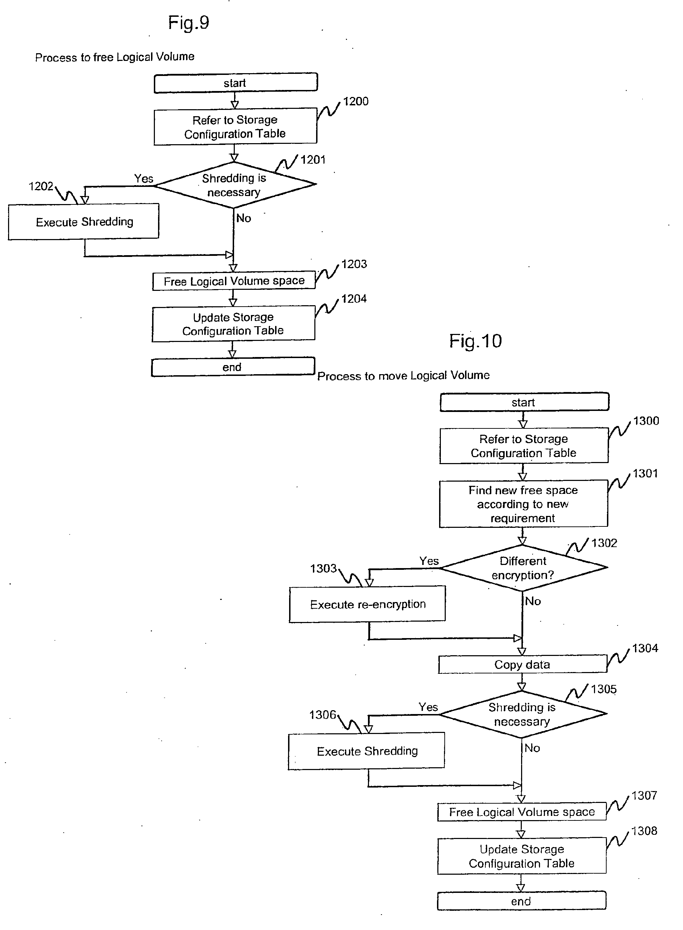

When a Logical Volume is no longer used for Host Computer 2, Storage System 1 frees the Logical Volume space within HDD Group and makes Free Space. In such a case, if necessary, Storage System 1 shreds data within the Logical Volume space within the HDD Group. Figure 9 shows an example process to shred data.
◆ Step 1200: Storage Configuration Service Program refers to Storage Configuration Table.
◆ Step 1201: Storage Configuration Service Program checks whether the HDD Group that involves the Logical Volume has Security Attribute "Shredding: On" or not. If data shredding is necessary for the Logical Volume, then proceed to Step 1202 otherwise proceed to Step 1203.
◆ Step 1202: Storage Configuration Service Program executes data shredding method that is defined by Security Attribute for the Logical Volume space. If there is no Logical Volume in the HDD Group, it shred all area of the HDD Group.
◆ Step 1203: Storage Configuration Service Program frees the Logical Volume space.
◆ Step 1204: Storage Configuration Service Program updates Storage Configuration Table.

When the Host Computer Administrator requires Storage Administrator to change security related requirement of Logical Volume, the.Storage Administrator can move a Logical Volume from one HDD Group to another HDD Group. In such a case, if necessary, Storage System 1 needs to change security level of Logical Volume. For example, when Storage System 1 moves Logical Volume from HDD Group A to HDD Group B, Storage System decrypts data and re-encrypts data using encryption related Security Attribute of HDD Group B if encryption related Security Attributes are different between HDD Group A and B. Also, if necessary, Storage System copies re-encrypted data to Logical Volume within HDD Group B and shreds data within Logical Volume space within HDD Group A. Figure 10 shows an example process to move Logical Volume.
◆ Step 1300: Storage Configuration Service Program refers to Storage Configuration Table.
◆ Step 1301: Storage Configuration Service Program receives modified Requirement of Logical Volume and finds new Free Space that can meet the requirement.
◆ Step 1302: Storage Configuration Service Program checks whether encryption related Security Attribute (encryption algorithm, key length, key, etc.) of new HDD Group is different from old one or not. If Security Attribute differs from each other, then proceed to Step 1303 otherwise proceed to Step 1304.
◆ Step 1303: Storage Configuration Service Program decrypts data using old Security Attribute and re-encrypts data using new Security Attribute.
◆ Step 1304: Storage Configuration Service Program copies re-encrypted data to new Logical Volume Space.
◆ Step 1305: Storage Configuration Service Program checks whether old HDD Group that involves the Logical Volume has Security Attribute "Shredding: On" or not. If data shredding is necessary for the Logical Volume then proceed to Step 1306 otherwise proceed to Step 1307.
◆ Step 1306: Storage Configuration Service Program executes data shredding method that is defined by Security Attribute for the Logical Volume space. If there is no Logical Volume in the HDD Group, it shred all area of the HDD Group.
◆ Step 1307: Storage Configuration Service Program frees the Logical Volume space.
◆ Step 1308: Storage Configuration Service Program updates Storage Configuration Table.

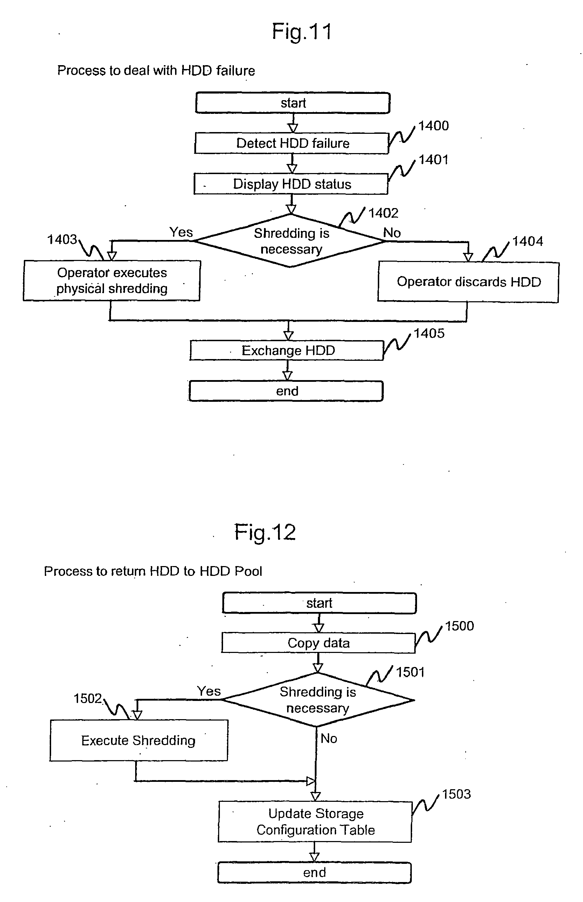

Figure 11 shows an example process to reconfigure HDD Group.
◆ Step 1400: Storage Configuration Service Program detects a HDD failure.
◆ Step 1401: Storage Configuration Service Program displays status information of the HDD including Security Attribute.
◆ Step 1402: Storage Administrator checks whether the HDD was in a HDD Group that needs data shredding or not. If the HDD has been in a HDD Group that needs data shredding, then proceeds to Step 1403 otherwise proceeds to Step 1404.
◆ Step 1403: It is possible that data within the HDD has not shredded yet because of its failure. Storage Administrator needs to execute physical shredding for the HDD such as destroying HDD. So, Storage Administrator checks Management Window and finds the failed HDD that should be destroyed using physical indicator, and then Storage Administrator destroys and discards the HDD.
◆ Step 1404: Storage Administrator discards the HDD.
◆ Step 1405: Storage Administrator exchanges the failed HDD for a new one.

Because of some maintenance reasons, an HDD could be excluded from an HDD Group and returned to HDD Pool. For example, in a case in which an HDD might fail, in a case in which Storage Administrator wants to upgrade HDD size, etc. Figure 12 shows an example process to return HDD to HDD Pool.
- Step 1500: If necessary, Storage Configuration Service Program copy data from the HDD to new one.
- Step 1501: Storage Configuration Service Program checks whether the HDD Group that involves the HDD has Security Attribute "Shredding: On" or not. If data shredding is necessary for the HDD, then proceed to Step 1502 otherwise proceed to Step 1503.
- Step 1502: Storage Configuration Service Program executes data shredding method that is defined by Security Attribute for the HDD.
- Step 1503: Storage Configuration Service Program excludes the HDD from the HDD Group and includes new one into the HDD Group, and updates Storage Configuration Table.

As can be understood from the above description of embodiments of the invention, aspects of this invention provide enhanced control of security for data residing on volumes of SAN. In general, embodiments of the invention divide the hard drives of the storage system into HDD groups and assigns to each group security attributes, such as encryption and shredding attributes. A table is maintained with these assigned attributes, so that it is easy to determine the type of data (e.g., encrypted or not) and type of handling (e.g., shred or not) for each individual hard drive. When a host computer requests an assignment of a logical volume, the security requirements for the volumes are compared against the security attributes of the HDD groups, and the logical volume is assigned to the HDD group that matches the security attributes. According to one feature, an additional HDD pool is provided for loading new hard drives to the system and for removing hard drives from HDD groups. According to another feature a physical indicator is provided to assist the storage administrator in identifying the security attributes of each individual hard drive.

By implementing embodiments of the invention, aspects of this invention can provide a storage system wherein it is easy to determine the type of data that resides in each individual hard drive. Additionally, by implementing embodiments of the invention it is assured that all hard drives within any HDD group contain the data having the same security attributes. Furthermore, by implementing embodiments of the invention it is assured that all of the logical volumes assigned to any hard drive within an HDD group will have the same security requirements.

Finally, it should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described software may be implemented in a wide variety of programming or scripting languages, such as Assembler, C/C++, perl, shell, PHP, Java, etc.

Moreover, other implementations of the invention will be apparent to those skilled in the art from consideration of the specification and practice of the invention disclosed herein. Various aspects and/or components of the described embodiments may be used singly or in any combination in the computerized storage system with data replication functionality. It is intended that the specification and examples be considered as exemplary only, with a true scope and spirit of the invention being indicated by the following claims.

## Claims

1. A method for managing assignment of logical volumes within a storage system, comprising:
a. Providing a plurality of hard drives;
b. defining at least two HDD groups;
c. assigning different security attributes to each of the HDD groups;
d. upon receiving a logical volume assignment request from a host computer, comparing the security requirements of the logical volume to the security attributes and assigning the logical volume to the HDD group that matches the security requirements.

2. The method of claim 1, further comprising:
defining an HDD pool; and,
upon installation of a new hard drive, assigning the new hard drive to the HDD pool.

3. The method of claim 2, further comprising upon releasing of a free hard drive from an HDD pool, assigning the free hard drive to the HDD pool.

4. The method of any one of claims 1 to 3, further comprising maintaining a configuration table and storing in the configuration table entries corresponding to: HDD group ID, HDD group security attribute, hard drive ID, and logical volume ID.

5. The method of claim 4, further comprising storing in the Configuration table entries corresponding to logical volume size.

6. The method of claim 4 or claim 5, further comprising storing in the configuration table entries indicating encryption attributes for each of the HDD groups.

7. The method of any one of claims 4 to 6, further comprising further comprising storing in the configuration table entries indicating shredding attributes for each of the HDD groups.

8. The method of any one of claims 1 to 7, further comprising maintaining an information table for each hard drive and storing in the information table entries corresponding to hard drive ID, physical location, status, and security attributes.

9. The method of claim 8, further comprising storing in the information table entries indicating HDD group for each hard drive.

10. The method of claim 9, further comprising storing in the information table entries indicating encryption attributes for each hard drive

11. The method of claim 9 or claim 10, further comprising storing in the information table entries indicating shredding attributes for each hard drive.

12. The method of any one of claims 1 to 11, further comprising maintaining a physical indicator for each hard drive to indicate encryption and shredding attribute of each hard drive.

13. The method of claim 12, wherein the physical indicator comprises an illumination device, and wherein the method comprises controlling illumination status of the illumination device to indicate encryption and shredding attribute of each hard drive.

14. A storage system enabling assignment of logical volumes while maintaining security attributes within hard drives, comprising:
a plurality of hard drives, each of the hard drive being assigned to one of at least two HDD groups;
a configuration table having stored therein entries corresponding to: HDD group ID, HDD group security attribute, hard drive ID, and logical volume ID;
a storage configuration module receiving logical volume assignment request and assigning the logical volume to one of the HDD groups by comparing security requirements of the logical volume to the security attributes stored in the configuration table.

15. The system of claim 14, further comprising a hard drive information table having stored therein entries corresponding to: hard drive ID, HDD group ID; and physical location.

16. The system of claim 14 or claim 15, further comprising a plurality of physical indicators, each indicator for a corresponding hard drive, each indicator providing indication of security attributes of the corresponding hard drive.

17. The system of claim 16, wherein at least some of the indicators comprise illumination devices indicating encryption attribute of each corresponding hard drive.

18. The system of claim 17, wherein at least some of the indicators comprise illumination devices indicating shredding attribute of each corresponding hard drive.

19. The system of any one of claims 14 to 18, further comprising a hard drive pool for maintaining hard drive not assigned to any HDD group.

20. The system of any one of claims 14 to 19, further comprising a shredding module and an encryption module.
